# EUROPÄISCHE PATENTANMELDUNG

(11) **EP 1 686 408 A1**
(43) Veröffentlichungstag der Anmeldung: **02.08.2006**
(21) Anmeldenummer: 05027495.0
(22) Anmeldetag: 15.12.2005
(51) Int. Cl.: G02B 21/24

(54) **Mikroskop**

(30) Priorität: 26.01.2005 DE 102005003797
(71) Anmelder: Leica Microsystems CMS GmbH, 35578 Wetzlar (DE)
(72) Erfinder: Storz, Rafael, Dr., 69115 Heidelberg (DE); Ulrich, Heinrich, Dr., 69121 Heidelberg (DE)
(74) Vertreter: Naumann, Ulrich

(57) **Zusammenfassung**

Ein Mikroskop mit einem Objektiv (1) und/oder einem Objektivwechsler und/oder einem Objektivrevolver und einer Einstelleinrichtung (3) für die Position eines Probentisches ist im Hinblick auf einen besonders einfachen Aufbau derart ausgestaltet und weitergebildet, dass das Objektiv (1) und/oder der Objektivwechsler und/oder der Objektivrevolver derart an die Einstelleinrichtung (3) ankoppelbar sind oder ist, dass die Position des Objektivs (1) und/oder Objektivwechslers und/oder Objektivrevolvers mittels der Einstelleinrichtung (3) justierbar ist.

## Beschreibung

Die vorliegende Erfindung betrifft ein Mikroskop mit einem Objektiv und/oder einem Objektivwechsler und/oder einem Objektivrevolver und einer Einstelleinrichtung für die Position eines Probentisches.

Mikroskope der eingangs genannten Art sind aus der Praxis bekannt und existieren in unterschiedlichen Ausführungsformen. Dabei sind beispielsweise Mikroskope bekannt, bei denen die Justierung des Objektivs, eines Objektivwechslers oder eines Objektivrevolvers über einen speziellen, dem Stativ-Grundkörper des Mikroskops zugeordneten Antrieb erfolgt. Zusätzlich ist bei den bekannten Mikroskopen eine Einstelleinrichtung für die Position eines Probentisches vorgesehen.

Bei den bekannten Mikroskopen ist daher nachteilig, dass der Grundkörper des Mikroskops speziell für die Aufnahme einer Halteeinrichtung mit einem Antrieb für das Objektiv, den Objektivwechsler oder den Objektivrevolver ausgebildet sein muss. Hiermit ist häufig ein begrenzter Verfahrweg in Z-Richtung, d.h. in die Verfahrrichtung des Objektivs entlang seiner optischen Achse, verbunden.

Der vorliegenden Erfindung liegt daher die Aufgabe zugrunde, ein Mikroskop der eingangs genannten Art anzugeben, bei dem ein besonders einfacher Aufbau realisiert ist.

Erfindungsgemäß wird die voranstehende Aufgabe durch ein Mikroskop mit den Merkmalen des Patentanspruchs 1 gelöst. Danach ist das Mikroskop derart ausgestaltet und weitergebildet, dass das Objektiv und/oder der Objektivwechsler und/oder der Objektivrevolver derart an die Einstelleinrichtung ankoppelbar sind oder ist, dass die Position des Objektivs und/oder Objektivwechslers und/oder Objektivrevolvers mittels der Einstelleinrichtung justierbar ist.

In erfindungsgemäßer Weise ist zunächst erkannt worden, dass es nicht zwingend erforderlich ist, eine separate Justier- oder Einstelleinrichtung zur Bewegung des Objektivs, Objektivwechslers oder Objektivrevolvers bei einem Mikroskop vorzusehen. In weiter erfindungsgemäßer Weise ist dann erkannt worden, dass eine Ankoppelbarkeit des Objektivs und/oder des Objektivwechslers und/oder des Objektivrevolvers an die Einstelleinrichtung die obige Aufgabe auf überraschend einfache Weise löst. Die Ankoppelbarkeit ist derart realisiert, dass die Position des Objektivs und/oder des Objektivwechslers und/oder des Objektivrevolvers mittels der Einstelleinrichtung justierbar ist. Mit anderen Worten kann hierbei die für den Probentisch vorgesehene Einstelleinrichtung zur Justierung des Objektivs und/oder des Objektivwechslers und/oder des Objektivrevolvers eingesetzt werden. Eine spezielle Halteeinrichtung mit Antrieb für das Objektiv und/oder den Objektivwechsler und/oder den Objektivrevolver, welche im Stativ-Grundkörper des Mikroskops ausgebildet ist, ist hierbei nicht erforderlich. Dies vereinfacht den Aufbau des Stativ-Grundkörpers und damit des Mikroskops erheblich.

Bei dem erfindungsgemäßen Mikroskop kann beispielsweise ein Standard-Stativ-Grundkörper eines aufrechten Mikroskops verwendet werden. Dabei kann der Verfahrweg in Z-Richtung deutlich länger realisiert sein.

Folglich ist mit dem erfindungsgemäßen Mikroskop ein Mikroskop realisiert, bei dem ein besonders einfacher Aufbau realisiert ist.

Hinsichtlich einer besonders einfachen Konstruktion könnte die Ankoppelbarkeit des Objektivs und/oder Objektivwechslers und/oder Objektivrevolvers mittels eines an die Einstelleinrichtung ankoppelbaren Halters für das Objektiv und/oder den Objektivwechsler und/oder den Objektivrevolver realisiert sein. Ein derartiger Halter könnte dabei als Adapter zwischen der Einstelleinrichtung und dem Objektiv und/oder dem Objektivwechsler und/oder dem Objektivrevolver wirken.

Im Hinblick auf eine besonders hohe Flexibilität könnte der Halter an die Einstelleinrichtung reversibel an- und von dieser abkoppelbar sein. Je nach Bedarf könnte der Halter von der Einstelleinrichtung abgenommen und wieder an der Einstelleinrichtung angebracht werden. Dabei könnten unterschiedliche Halter für unterschiedliche Objektive, Objektivwechsler und/oder Objektivrevolver zum Einsatz kommen. In jedem Fall ist eine einfache Verschiebung in Z-Richtung mittels Aktivierung der Einstelleinrichtung ermöglicht.

Weiterhin im Hinblick auf eine hohe Flexibilität des Mikroskops könnte der Probentisch an die Einstelleinrichtung reversibel an- und von dieser abkoppelbar sein. Hierdurch kann wahlweise mit oder ohne Probentisch mit dem Mikroskop gearbeitet werden.

Bei einer besonders vorteilhaften Ausgestaltung des Mikroskops könnte der Halter alternativ oder zusätzlich zum Probentisch an die Einstelleinrichtung ankoppelbar sein. Bei einer Ausgestaltung des Mikroskops ohne Halter könnten oder könnte das Objektiv und/oder der Objektivwechsler und/oder der Objektivrevolver ebenfalls alternativ oder zusätzlich zum Probentisch an die Einstelleinrichtung ankoppelbar sein. Je nach Erfordernis ist hierbei die geeignete Konfiguration zu wählen.

Hinsichtlich der Ankoppelbarkeit des Objektivs und/oder Objektivwechslers und/oder Objektivrevolvers und/oder Halters an der Einstelleinrichtung sind unterschiedliche Realisierungen möglich. Bei einer besonders einfachen Ausgestaltung könnte die Ankoppelbarkeit über eine Verschraubung realisiert sein. Alternativ hierzu und im Hinblick auf einen besonders schnellen Ankoppelvorgang und Abkoppelvorgang könnte eine Renkverbindung, vorzugsweise Bajonettverbindung, realisiert sein. Es sind jedoch auch Klemm-, Rast- oder Schnappverbindungen zur Gewährleistung einer sicheren Ankoppelbarkeit möglich.

Bei einer besonders vorteilhaften Ausgestaltung könnte der Halter oder die Einstelleinrichtung zur Aufnahme eines Makro-Objektivs ausgebildet sein. Hierdurch könnte in vorteilhafter Weise ein Mikroskop mit Scanneranbindung realisiert sein, mit dem man große Proben anschauen kann und gleichzeitig auch eine gute Fluoreszenz-Achse hat.

Grundsätzlich sind die Aufnahme und/oder Ankopplung und der Antrieb verschiedener Halter möglich. Dabei könnte beispielsweise ein einzelnes Spezialobjektiv großer Bauform oder wahlweise ein Objektivwechsler für zwei Objektive oder ein Objektivrevolver mit Standardobjektiven einsetzbar sein.

Bei dem erfindungsgemäßen Mikroskop ist grundsätzlich von Vorteil, dass eine bereits vorhandene Einstelleinrichtung für die Position eines Probentischs für das Verfahren eines Objektivs und/oder eines Objektivwechslers und/oder eines Objektivrevolvers genutzt werden kann. Eine weitere spezielle Einstelleinrichtung für ein Objektiv und/oder einen Objektivwechsler und/oder einen Objektivrevolver ist dabei nicht erforderlich.

Die Einstelleinrichtung könnte einen mechanischen oder elektrischen Antrieb aufweisen. Hierbei ist auf den jeweiligen Anwendungsfall abzustellen.

Bei der erfindungsgemäßen Ausgestaltung des Mikroskops kann mittels der Einstelleinrichtung für die Position des Probentischs eine Relativbewegung des Objektivs und/oder des Objektivwechslers und/oder des Objektivrevolvers zu dem Stativ oder Grundkörper des Mikroskops erzeugt werden. Bei einer besonders vorteilhaften Ausgestaltung des Mikroskops kann auch eine Relativbewegung zwischen Probentisch und Objektiv und/oder Objektivwechsler und/oder Objektivrevolver bereitgestellt sein. Hierzu könnte die Einstelleinrichtung in geeigneter Weise ausgestaltet sein, so dass das Objektiv und/oder der Objektivwechsler und/oder der Objektivrevolver unabhängig vom Probentisch und der Probentisch unabhängig vom Objektiv und/oder Objektivwechsler und/oder Objektivrevolver bewegbar ist. Die relative Beweglichkeit des Probentischs zum Stativ oder Grundkörper kann dabei in jedem Fall erhalten bleiben.

Die vorliegende Erfindung ist insbesondere bei so genannten Fixed-Stage-Mikroskopen anwendbar, wobei ein Objektiv-Fokustrieb über den Antrieb des Objekttisches statt über eine Mechanik im Grundkörper erfolgt.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Lehre anhand der Zeichnung zu verweisen. In Verbindung mit der Erläuterung des bevorzugten Ausführungsbeispiels der erfindungsgemäßen Lehre anhand der Zeichnung werden auch im Allgemeinen bevorzugte Ausgestaltung und Weiterbildungen der Lehre erläutert. In der Zeichnung zeigen
- Fig. 1: in einer schematischen Darstellung ein Ausführungsbeispiel eines erfindungsgemäßen Mikroskops und
- Fig. 2: in einer schematischen Darstellung ein herkömmliches Mikroskop.

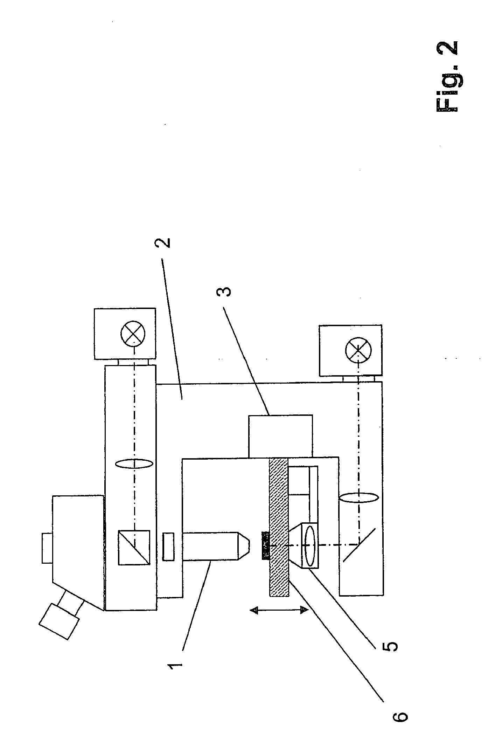

Fig. 1 zeigt in einer schematischen Darstellung ein Ausführungsbeispiel eines erfindungsgemäßen Mikroskops. Das Mikroskop weist ein Objektiv 1 und eine in einem Grundkörper 2 des Mikroskops angeordnete Einstelleinrichtung 3 für die Position eines Probentischs auf. Im Hinblick auf einen besonders einfachen Aufbau ist das Objektiv 1 derart an die Einstelleinrichtung 3 ankoppelbar, dass die Position des Objektivs 1 mittels der Einstelleinrichtung 3 justierbar ist. Zur einfachen Realisierung der Ankoppelbarkeit des Objektivs 1 an die Einstelleinrichtung 3 ist ein an die Einstelleinrichtung 3 ankoppelbarer Halter 4 für das Objektiv 1 vorgesehen.

Der Halter 4 ist reversibel an die Einstelleinrichtung 3 an- und von dieser abkoppelbar.

Des Weiteren ist mit der Bezugsziffer 5 ein Kondensor des Mikroskops gezeigt.

Die Ankoppelbarkeit des Objektivs 1 und/oder des Halters 4 kann wahlweise über eine Verschraubung, über eine Renkverbindung, vorzugsweise Bajonettverbindung, oder über eine Klemm-, Rast- oder Schnappverbindung realisiert sein.

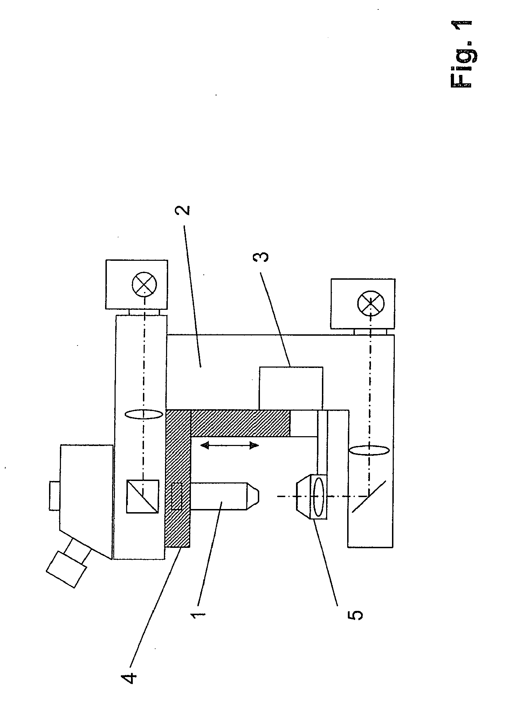

Fig. 2 zeigt in einer schematischen Darstellung ein herkömmliches Mikroskop mit einem Objektiv 1, einem Grundkörper 2, einer Einstelleinrichtung 3 für einen Probentisch 6 und einem Kondensor 5. Neben der Einstelleinrichtung 3 für den Probentisch 6 ist hier noch eine weitere, nicht gezeigte Einstelleinrichtung für das Objektiv 1 vorgesehen, die zusätzlich in den Grundkörper 2 des Mikroskops integriert ist. Hierdurch liegt eine aufwendigere Ausgestaltung des herkömmlichen Mikroskops im Vergleich mit dem erfindungsgemäßen Mikroskop vor.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf dieses Ausführungsbeispiel einschränkt.

## Patentansprüche

1. Mikroskop mit einem Objektiv (1) und/oder einem Objektivwechsler und/oder einem Objektivrevolver und einer Einstelleinrichtung (3) für die Position eines Probentisches (6),
**dadurch gekennzeichnet, dass** das Objektiv (1) und/oder der Objektivwechsler und/oder der Objektivrevolver derart an die Einstelleinrichtung (3) ankoppelbar sind oder ist, dass die Position des Objektivs (1) und/oder Objektivwechslers und/oder Objektivrevolvers mittels der Einstelleinrichtung (3) justierbar ist.

2. Mikroskop nach Anspruch 1, **dadurch gekennzeichnet, dass** die Ankoppelbarkeit des Objektivs (1) und/oder Objektivwechslers und/oder Objektivrevolvers mittels eines an die Einstelleinrichtung (3) ankoppelbaren Halters (4) für das Objektiv (1) und/oder den Objektivwechsler und/oder den Objektivrevolver realisiert ist.

3. Mikroskop nach Anspruch 2, **dadurch gekennzeichnet, dass** der Halter (4) an die Einstelleinrichtung (3) reversibel an- und von dieser abkoppelbar ist.

4. Mikroskop nach einem der Ansprüche 1 bis 3, **dadurch gekennzeichnet, dass** der Probentisch (6) an die Einstelleinrichtung (3) reversibel an- und von dieser abkoppelbar ist.

5. Mikroskop nach einem der Ansprüche 1 bis 4, **dadurch gekennzeichnet, dass** das Objektiv (1) und/oder der Objektivwechsler und/oder der Objektivrevolver und/oder der Halter (4) alternativ oder zusätzlich zum Probentisch (6) an die Einstelleinrichtung (3) ankoppelbar sind oder ist.

6. Mikroskop nach einem der Ansprüche 1 bis 5, **dadurch gekennzeichnet, dass** die Ankoppelbarkeit des Objektivs (1) und/oder Objektivwechslers und/oder Objektivrevolvers und/oder die Ankoppelbarkeit des Halters (4) über eine Verschraubung realisiert ist.

7. Mikroskop nach einem der Ansprüche 1 bis 5, **dadurch gekennzeichnet, dass** die Ankoppelbarkeit des Objektivs (1) und/oder Objektivwechslers und/oder Objektivrevolvers und/oder die Ankoppelbarkeit des Halters (4) über eine Renkverbindung, vorzugsweise Bajonettverbindung, realisiert ist.

8. Mikroskop nach einem der Ansprüche 1 bis 5, **dadurch gekennzeichnet, dass** die Ankoppelbarkeit des Objektivs (1) und/oder Objektivwechslers und/oder Objektivrevolvers und/oder die Ankoppelbarkeit des Halters (4) über eine Klemm-, Rast-oder Schnappverbindung realisiert ist.

9. Mikroskop nach einem der Ansprüche 1 bis 8, **dadurch gekennzeichnet, dass** der Halter (4) oder die Einstelleinrichtung (3) zur Aufnahme eines Makro-Objektivs ausgebildet ist.

10. Mikroskop nach einem der Ansprüche 1 bis 9, **dadurch gekennzeichnet, dass** die Einstelleinrichtung (3) einen mechanischen Antrieb aufweist.

11. Mikroskop nach einem der Ansprüche 1 bis 9, **dadurch gekennzeichnet, dass** die Einstelleinrichtung (3) einen elektrischen Antrieb aufweist.
